# EUROPÄISCHE PATENTSCHRIFT

(11) **EP 3 938 325 B1**
(45) Veröffentlichungstag und Bekanntmachung des Hinweises auf die Patenterteilung: **17.09.2025**
(21) Anmeldenummer: 20711104.8
(22) Anmeldetag: 10.03.2020
(51) Int. Cl.: C03B 33/02, C03B 33/033, C03B 33/07, B23K 26/00, B23K 26/38, B23K 26/40, B23K 26/53, B23D 31/00, B23K 101/18, B23K 103/16, B23K 103/00

(54) **TRENNVORRICHTUNG**
SEPARATING DEVICE
DISPOSITIF DE SÉPARATION

(30) Priorität: 11.03.2019 DE 202019101375 U
(43) Veröffentlichungstag der Anmeldung: 19.01.2022
(73) Patentinhaber: 4JET microtech GmbH, 52477 Alsdorf (DE)
(72) Erfinder: MOALEM, Anas, 52249 Eschweiler (DE)
(74) Vertreter: Dilg, Haeusler, Schindelmann Patentanwaltsgesellschaft mbH
(86) Internationale Anmeldenummer: PCT/EP2020/056292
(87) Internationale Veröffentlichungsnummer: WO 2020/182785

(56) Entgegenhaltungen:
- JP-A- 2005 001 264
- US-A1- 2003 019 897
- US-A1- 2010 089 883
- US-B2- 8 444 906

## Beschreibung

### TECHNISCHES GEBIET

Die hierin offenbarten Gegenstände betreffen das Gebiet der Trennvorrichtungen für einen Scheibenstapel.

### HINTERGRUND

DE 10 2016 213 802 A1 offenbart ein Verfahren und eine Vorrichtung zum Trennen eines Materials entlang einer vorgesehenen Trennkontur mittels Laserstrahlung, wobei Schädigungsstellen entlang der Trennkonturen das Innere des Materials eingebracht werden, entlang der Trennkontur eine Flüssigkeit auf das Material aufgetragen wird und ein Laserstrahl auf die Trennkontur gerichtet wird, um das Material entlang der Trennkontur zu trennen.

US 2010/0089883 A1 betrifft ein Werkstückteilungsverfahren für ein Flüssigkeitskristallglassubstrat wobei eine TFT-seitige Polarisationsplatte entlang jeder beabsichtigten Trennlinie in einer gürtelähnlichen Form ablatiert wird. In einem weiteren Prozess wird eine Last auf das Flüssigkeitskristallglassubstrat angelegt durch eine Biegespannung oder eine Schererspannung.

US 8,444,906 B2 offenbart eine erste Rillenlinie GL1 in einem ersten Glassubstrat durch einen ersten oszillierenden Laserstrahl LB1 zu bilden und eine zweite Rillenlinie in einem zweiten Glassubstrat unter Verwendung eines zweiten oszillierenden Laserstrahles LB2 zu bilden. Eine Trennung entlang der Rillenlinien erfolgt durch Anlegen einer Kraft an das Panel in einer Richtung entgegengesetzt der Richtung, in welcher die Rillenlinien vertieft sind.

US 2003/0019897A1 offenbart ein Trennen eines laminierten Glases mit einem ersten Substrat und einem zweiten Substrat. Ein Trennen des ersten Substrats und des zweiten Substrats erfolgt mit einem Soft-Breaker.

JP 2005 001264 offenbart eine Trennvorrichtung mit einem harten Werkzeug zum Bilden eines Kanals in der Oberfläche eines Substrats und eine Druckdüse, welche nicht nur als Trennmittel sondern auch als ein Beförderungsmittel funktioniert.

### ZUSAMMENFASSUNG

Angesichts der oben beschriebenen Situation gibt es ein Bedürfnis für eine Technik, welche eine effiziente Trennung eines Stapels von Platten erlaubt.

Diesem Bedürfnis wird durch die Gegenstände der unabhängigen Ansprüche Rechnung getragen. Vorteilhafte Ausführungsformen sind in den abhängigen Ansprüchen angegeben.

Die beanspruchte Erfindung ist durch die unabhängigen Patentansprüche definiert.

Gemäß dem ersten Aspekt der hierin offenbarten Gegenstände wird eine Trennvorrichtung gemäß Anspruch 1 offenbart.

Gemäß einem zweiten Aspekt der hierin offenbarten Gegenstände wird ein Verfahren zum Trennen eines Plattenstapels gemäß Anspruch 13 offenbart.

Gemäß einem dritten Aspekt der hierin offenbarten Gegenstände wird ein Computerprogrammprodukt, insbesondere ein nicht-transientes

Computerprogrammprodukt gemäß Anspruch 15 offenbart.

Gemäß einem vierten Aspekt der hierin offenbarten Gegenstände wird ein Teilstapel eines Plattenstapels gemäß Anspruch 12 offenbart.

Verschiedene Aspekte und Ausführungsformen der hierin offenbarten Gegenstände basieren auf der Idee, dass ein Trennen eines Plattenstapels effizient dadurch erfolgen kann, dass eine erste Platte mittels Laserstrahlung getrennt wird und eine zweite Platte mechanisch getrennt wird.

Gemäß Ausführungsformen des ersten Aspektes ist die Trennvorrichtung ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten und/oder vierten Aspektes.

Gemäß Ausführungsformen des zweiten Aspektes ist das Verfahren ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten und/oder vierten Aspektes.

Gemäß Ausführungsformen des dritten Aspektes ist das Computerprogrammprodukt ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten und/oder vierten Aspektes

Gemäß Ausführungsformen des vierten Aspektes ist der Teilstapel ausgebildet zum Liefern der Funktionalität von einer oder mehreren der hierin offenbarten Ausführungsformen und/oder zum Liefern der Funktionalität, wie sie für eine oder mehrere der hierin offenbarten Ausführungsformen erforderlich ist, insbesondere der Ausführungsformen des ersten, zweiten, dritten und/oder vierten Aspektes.

Weitere Vorteile und Merkmale der hierin offenbarten Gegenstände ergeben sich aus der folgenden beispielhaften Beschreibung derzeit bevorzugter Ausführungsformen, auf welche die vorliegende Offenbarung jedoch nicht beschränkt ist. Die einzelnen Figuren der Zeichnungen dieser Anmeldung sind lediglich als schematisch und als nicht notwendigerweise maßstabsgetreu anzusehen.

### KURZE BESCHREIBUNG DER ZEICHNUNGEN

Fig. 1 veranschaulicht schematisch ein Trennverfahren gemäß Ausführungsformen der hierin offenbarten Gegenstände.
Fig. 2 zeigt den Plattenstapel aus Fig. 1 nach der Trennung der ersten Platte.
Fig. 3 zeigt den Plattenstapel aus Fig. 1 während der mechanischen Trennung der zweiten Platte.
Fig. 4 zeigt den Plattenstapel aus Fig. 1 nach der mechanischen Trennung der zweiten Platte in einen ersten Teil und einen zweiten Teil.
Fig. 5 zeigt eine Trennvorrichtung gemäß Ausführungsformen der hierin offenbarten Gegenstände.

### BESCHREIBUNG EXEMPLARISCHER AUSFÜHRUNGSFORMEN

Im Folgenden werden exemplarische Ausführungsformen der hierin offenbarten Gegenstände beschrieben, wobei beispielsweise auf eine Trennvorrichtung, eine Steuervorrichtung, einen Plattenstapel, ein Verfahren und ein Computerprogrammprodukt Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren oder ein Computerprogrammprodukt beschrieben, während andere Ausführungsformen mit Bezug auf eine Trennvorrichtung, eine Steuervorrichtung oder einen Plattenstapel beschrieben werden. Jedoch wird der Fachmann der vorstehenden und der nachfolgenden Beschreibung, den Ansprüchen und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren oder ein Computerprogrammprodukt bezieht, mit einem Merkmal kombinierbar, welches sich auf eine Trennvorrichtung, eine Steuervorrichtung oder einen Plattenstapel, bezieht, und umgekehrt. Ferner ist ein Merkmal einer Ausführungsform, welches sich auf eine Trennvorrichtung, eine Steuervorrichtung oder einen Plattenstapel bezieht, mit einem korrespondierenden Merkmal kombinierbar, welches sich auf ein Verfahren oder ein Computerprogrammprodukt bezieht. Mit der Offenbarung eines Verfahrens, einer Ausführungsform eines Verfahrens oder einer Funktion sind ferner ein oder mehrere Aktoren sowie eine mit den Aktoren zusammenwirkende Funktionalität einer Steuervorrichtung als offenbart anzusehen, welche zur Ausführung des Verfahrens bzw. der Funktion ausgebildet sind. Ferner ist mit der Offenbarung einer Funktion einer Vorrichtung ein entsprechendes Verfahren, welches die Funktion ohne Vorrichtungsmerkmale definiert, als offenbart anzusehen.

Wie hierin verwendet, ist eine Bezugnahme auf das Computerprogrammprodukt mit einem Programmelement äquivalent zu einer Bezugnahme auf das Programmelement und/oder ein computerlesbares Medium, welches ein Programmelement enthält, wobei das Programmelement eingerichtet ist zum Steuern der Prozessorvorrichtung (beispielsweise eines Computersystems) zum Bewirken und/oder Koordinieren der Ausführung von einem oder mehreren der oben beschriebenen Verfahren.

Das Programmelement kann implementiert sein als computerlesbarer Instruktionscode durch Verwendung von irgendeiner geeigneten Programmiersprache, wie beispielsweise, zum Beispiel, JAVA, C#, etc. und kann gespeichert sein auf einem computerlesbaren Medium (entfernbare Disc, flüchtiger oder nicht-flüchtiger Speicher, Embedded Speicher/Prozessor etc.). Der Instruktionscode ist betreibbar zum Programmieren eines Computers oder irgendeiner anderen programmierbaren Prozessorvorrichtung zum Ausführen der beabsichtigten Funktionen. Das Programmelement kann von einem Netzwerk verfügbar sein, beispielsweise von dem WorldWideWeb, von welchem es heruntergeladen werden kann.

Die hierin offenbarten Gegenstände können realisiert werden mittels eines Programmelements bzw. Software. Jedoch können die hierin offenbarten Gegenstände auch realisiert werden mittels einem oder mehreren spezifischen elektronischen Schaltungen bzw. Hardware. Ferner können die hierin offenbarten Gegenstände auch in Hybridform realisiert werden, d.h. in einer Kombination von Softwaremodulen und Hardwaremodulen.

Hierin wird eine Trennvorrichtung offenbart. Die Trennvorrichtung weist eine Laservorrichtung und eine mechanische Vorrichtung auf. Die Laservorrichtung ist eingerichtet, um eine Trennung einer ersten Platte eines Plattenstapels mittels Laserstrahlung durchzuführen. Die mechanische Vorrichtung eingerichtet, um eine mechanische Trennung einer zweiten Platte des Plattenstapels durchzuführen.

Gemäß einer Ausführungsform sind die erste Platte und die zweite Platte Endplatten des Plattenstapels, welche auf entgegengesetzten Seiten des Plattenstapels angeordnet sind. Gemäß einer Ausführungsform weist der Plattenstapel mehr als zwei Platten auf. Mit anderen Worten weist gemäß einer Ausführungsform der Plattenstapel die erste Platte, die zweite Platte und mindestens eine innere Platte auf, die zwischen der ersten Platte und der zweiten Platte angeordnet ist. Gemäß einer Ausführungsform kann vorgesehen sein, dass die erste Platte und die mindestens eine innere Platte mittels Laserstrahlung der Laservorrichtung getrennt werden.

Entsprechend weist gemäß einer Ausführungsform ein Verfahren zum Trennen eines Plattenstapels, welcher eine erste Platte und eine zweite Platte aufweist, eine oder mehrere der folgenden Ausführungsformen auf. Das Verfahren weist eine Trennung der ersten Platte mittels Laserstrahlung und eine mechanische Trennung der zweiten Platte auf.

Gemäß einer Ausführungsform ist die erste Platte eine Glasplatte und/oder die zweite Platte ist eine Glasplatte. Wie hierin verwendet bezeichnet Glas ein amorphes Material, welches Siliziumdioxid aufweist, oder aus Siliziumdioxid besteht.

Gemäß einer Ausführungsform sind in dem Plattenstapel die erste Platte und die zweite Platte mit Abstand voneinander angeordnet. Gemäß einer Ausführungsform sind die erste Platte und die zweite Platte einander gegenüberliegend angeordnet, d. h. die erste Platte und die zweite Platte sind einander benachbart angeordnet. Gemäß einer weiteren Ausführungsform, in welcher der Plattenstapel mindestens drei Platten aufweist, sind mindestens zwei benachbarte Platten der mindestens drei Platten mit Abstand voneinander angeordnet. In diesem Zusammenhang bedeutet "einander gegenüberliegend angeordnet" oder "benachbart angeordnet", dass keine weiteren Platten zwischen den benachbart angeordneten Platten angeordnet sind.

Gemäß einer Ausführungsform sind benachbarte Platten, beispielsweise die erste Platte und die zweite Platte durch eine Verklebung miteinander verklebt. Gemäß einer Ausführungsform definiert die Verklebung einen Abstand der beiden benachbarten Platten, beispielsweise der ersten Platte und der zweiten Platte.

Gemäß einer Ausführungsform weist die erste Platte eine erste Oberfläche und die zweite Platte eine zweite Oberfläche (beispielsweise eine Hauptfläche) auf, wobei die erste Oberfläche und die zweite Oberfläche einander zugewandt sind. Gemäß einer weiteren Ausführungsform erstreckt sich die Verklebung nur über einen Teil der ersten Oberfläche und nur über einen Teil der zweiten Oberfläche. Gemäß einer Ausführungsform ist ein Oberflächenabschnitt, in welchem die Trennung der ersten Platte bzw. der zweiten Platte erfolgt, frei von der Verklebung.

Gemäß einer Ausführungsform ist zwischen der ersten Platte und der zweiten Platte ein Luftspalt angeordnet. Gemäß einer weiteren Ausführungsform erfolgt die Trennung der ersten Platte und der zweiten Platte im Bereich des Luftspalts.

Gemäß einer weiteren Ausführungsform ist eine Behandlungsvorrichtung vorgesehen (beispielsweise weist die Trennvorrichtung eine Behandlungsvorrichtung auf) wobei die Behandlungsvorrichtung eingerichtet ist zum Erzeugen von mindestens einem Trennbereich in der ersten Platte und/oder der zweiten Platte. Gemäß einer Ausführungsform ist die betreffende Platte (beispielsweise die erste Platte und/oder die zweite Platte) in dem mindestens einen Trennbereich mechanisch geschwächt um das Trennen der betreffenden Platte (beispielsweise die Trennung der ersten Platte mittels Laserstrahlung und/oder die mechanische Trennung der zweiten Platte) zu unterstützen.

Gemäß einer Ausführungsform wird der mindestens eine Trennbereich durch einen Laserstrahl erzeugt, beispielsweise wie in der DE 10 2016 213 802 A1 beschrieben. Beispielsweise kann der mindestens eine Trennbereich eine Vielzahl von Trennbereichen (oder Schädigungsstellen) umfassen.

Gemäß einer Ausführungsform erfolgt die Trennung der ersten Platte und die mechanische Trennung der zweiten Platte zeitlich nacheinander. Beispielsweise kann die Trennvorrichtung gemäß einer Ausführungsform eingerichtet sein, um zunächst die Trennung der ersten Platte mittels der Laservorrichtung durchzuführen und um anschließend die mechanische Trennung der zweiten Platte durchzuführen.

Gemäß einer Ausführungsform weist die Laservorrichtung mindestens einen CO2-Laser auf und die Laserstrahlung (für die Trennung der ersten Platte) ist durch den mindestens einen CO2-Laser erzeugbar.

Gemäß einer Ausführungsform ist die mechanische Vorrichtung eingerichtet, um eine Kraft auf die zweite Platte auszuüben und dadurch die mechanische Trennung der zweiten Platte zu bewirken.

Gemäß einer Ausführungsform weist die mechanische Vorrichtung ein Stützelement auf. Gemäß einer Ausführungsform stützt das Stützelement die zweite Platte in mindestens einem Stützbereich, um die mechanische Trennung der zweiten Platte durch Brechen der zweiten Platte über das Stützelement durchzuführen.

Gemäß einer weiteren Ausführungsform kann die mechanische Vorrichtung ein Gegenelement aufweisen. Beispielsweise kann das Gegenelement eine Gegenkraft liefern, um den Stützbereich und die zweite Platte gegeneinander zu drücken. Beispielsweise kann das Gegenelement die Gegenkraft auf die erste Platte ausüben, beispielsweise im Bereich der Verklebung der ersten Platte mit der zweiten Platte.

Gemäß einer Ausführungsform ist das Stützelement ein Schneidrad, wobei die mechanische Trennung der zweiten Platte ein Rollen des Schneidrades über eine äußere Oberfläche der zweiten Platte längs des mindestens einen Stützbereichs umfasst. In diesem Fall stützt das Stützelement (Schneidrad) die zweite Platte nicht gleichzeitig (zu einem Zeitpunkt) über den gesamten mindestens einen Stützbereich, sondern das Stützen der zweiten Platte entlang des mindestens einen Stützbereichs erfolgt über ein (ausgedehntes) Zeitintervall.

Die Trennvorrichtung liefert somit einen Teilstapel, welcher einen Teil der ersten Platte und einen Teil der zweiten Platte aufweist. Bedingt durch das Trennen des Plattenstapels mit der Trennvorrichtung weist der Teil der ersten Platte weist eine Trennfläche auf, die durch eine Trennung mittels Laserstrahlung erzeugt ist und der Teil der zweiten Platte weist eine Trennfläche auf die durch eine mechanische Trennung erzeugt ist.

### DETAILLIERTE BESCHREIBUNG

Nachfolgend werden exemplarische Ausführungsformen der hierin offenbarten Gegenstände mit Bezug auf die Zeichnungen beschrieben. Es wird angemerkt, dass in verschiedenen Figuren ähnliche oder identische Elemente oder Komponenten teilweise mit denselben Bezugszahlen versehen sind, oder mit Bezugszahlen, die sich nur in der ersten Ziffer und/oder einer angehängten Ziffer unterscheiden. Merkmale bzw. Komponenten, die mit den entsprechenden Merkmalen bzw. Komponenten in einer anderen Figur gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt. Die vorstehenden Definitionen gelten gemäß einer Ausführungsform für die nachfolgenden Ausführungsformen, und umgekehrt. Ferner sind die vorstehend beschriebenen Merkmale und Ausführungsformen mit den nachfolgend beschriebenen Merkmalen und Ausführungsformen kombinierbar.

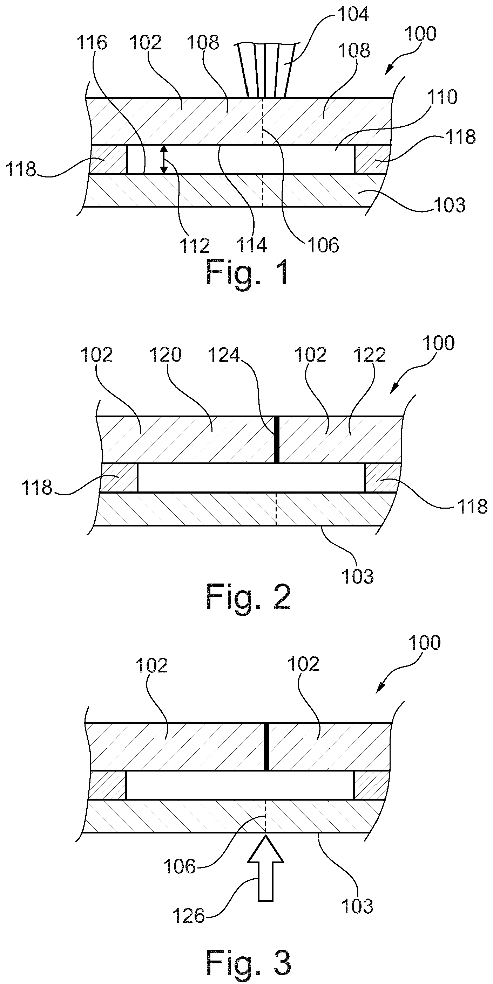

Fig. 1 veranschaulicht schematisch ein Trennverfahren gemäß Ausführungsformen der hierin offenbarten Gegenstände.

Gemäß einer Ausführungsform weist ein Plattenstapel 100 eine erste Platte 102 und eine zweite Platte 103 auf. Gemäß einer Ausführungsform ist die erste Platte 102 eine Glasplatte (auch als Glasscheibe bezeichnet) und die zweite Platte 103 ist ebenfalls eine Glasplatte.

Gemäß einer Ausführungsform weist das Verfahren zum Trennen des Plattenstapels 100 eine Trennung der ersten Platte 102 mittels Laserstrahlung 104 auf. Gemäß einer Ausführungsform erfolgt die Trennung mittels der Laserstrahlung 104 in einem Trennbereich 106, in welchem die Platte 102 mechanisch geschwächt ist. Mechanisch geschwächt bedeutet hierin, dass mindestens eine mechanische Eigenschaft (beispielsweise eine Bruchfestigkeit) der Platte 102 in dem Trennbereich gegenüber den benachbarten Gebieten 108 verschlechtert ist.

Gemäß einer Ausführungsform erfolgt die Trennung der ersten Platte 102 im Bereich eines Luftspalts 110 zwischen der ersten Platte 102 und der zweiten Platte 103. Der Luftspalt 110 ist gemäß einer Ausführungsform durch einen Abstand 112 zwischen der ersten Platte 102 und der zweiten Platte 103 gebildet. Somit liegt gemäß einer Ausführungsform eine erste Oberfläche 114 der ersten Platte 102 einer zweiten Oberfläche 116 der zweiten Platte 103 gegenüber, wobei der Luftspalt 110 zwischen der ersten Oberfläche 114 und der zweiten Oberfläche 116 angeordnet ist.

Gemäß einer Ausführungsform sind die erste Platte 102 und die zweite Platte 103 durch eine Verklebung 118 miteinander verbunden. Gemäß einer weiteren Ausführungsform definiert die Verklebung 118 den Abstand 112 zwischen der ersten Platte und der zweiten Platte. Gemäß einer weiteren Ausführungsform können Abstandshalter (in Figur 1 nicht dargestellt) zwischen der ersten Platte 102 und der zweiten Platte 103 vorgesehen sein.

Fig. 2 zeigt den Plattenstapel 100 aus Fig. 1 nach der Trennung der ersten Platte 102.

Durch die Verklebung 118 kann ein erster Teil 120 der ersten Platte 102 und ein zweiter Teil 122 der ersten Platte 102 in einer definierten Position gehalten sein, beispielsweise so dass sich der erste Teil 120 und der zweite Teil 122 der Platte 102 einander in einem Kontaktbereich 124 kontaktieren, beispielsweise wie in Fig. 2 dargestellt.

Fig. 3 zeigt den Plattenstapel 100 aus Fig. 1 während der mechanischen Trennung der zweiten Platte 103.

Gemäß einer Ausführungsform wird auf die zweite Platte in einem Trennbereich 106 eine Kraft 126 ausgeübt, so dass die zweite Platte 103 in dem Trennbereich 106 bricht. Der Trennbereich 106 der zweiten Platte 103 ist gemäß einer Ausführungsform analog zu dem Trennbereich 106 der ersten Platte 102 ausgebildet und hergestellt.

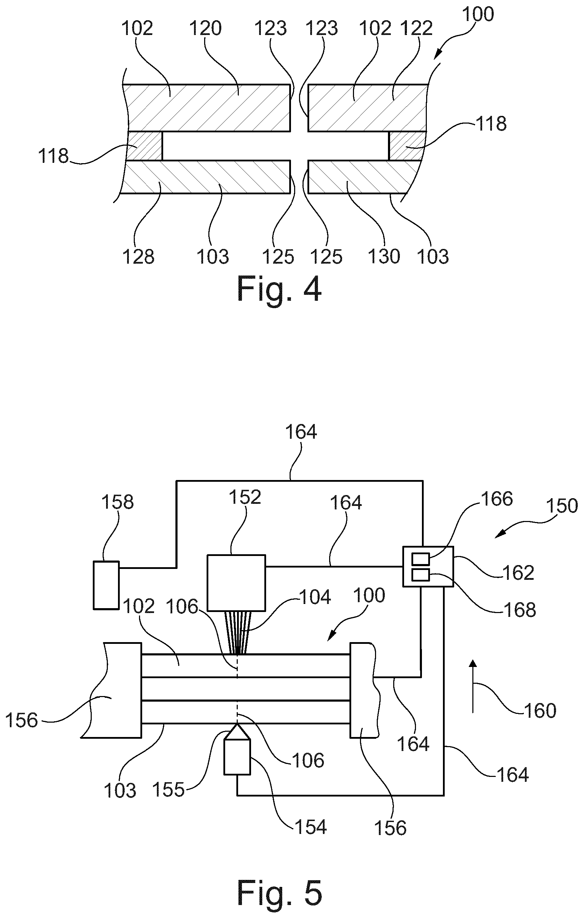

Fig. 4 zeigt den Plattenstapel 100 aus Fig. 1 nach der mechanischen Trennung der zweiten Platte 103 in einen ersten Teil 128 und einen zweiten Teil 130.

Nach der Trennung der ersten Platte 102 mittels Laserstrahlung 104 und der mechanischen Trennung der zweiten Platte 103 sind die ersten Teile, 120, 128 der ersten Platte 102 und der zweiten Platte 103 von den zweiten Teilen 122, 130 der ersten Platte 102 und der zweiten Platte 103 voneinander separierbar, wie beispielsweise in Fig. 4 dargestellt. Gemäß einer Ausführungsform sind der erste Teil 120 der ersten Platte 102 und der Teil 128 der zweiten Platte 103 durch die Verklebung 118 relativ zueinander fixiert, beispielsweise wie in Fig. 4 dargestellt. Entsprechend sind gemäß einer Ausführungsform der zweite Teil 122 der ersten Platte 102 und der zweite Teil 130 der zweiten Platte 103 durch die Verklebung 118 relativ zueinander fixiert, beispielsweise wie in Fig. 4 dargestellt.

Bedingt durch das beschriebene Trennverfahren, weist der erste Teil 120 und der zweite Teil 122 der ersten Platte 102 jeweils eine Trennfläche 123 auf, die durch eine Trennung mittels Laserstrahlung erzeugt ist. Ferner weist bedingt durch das beschriebene Trennverfahren, der erste Teil 128 und der zweite Teil 130 der zweiten Platte 103 jeweils eine Trennfläche 125 auf, die durch eine mechanische Trennung erzeugt ist. Der erste Teil 120 der ersten Platte 102 und der erste Teil 128 der zweiten Platte 103 bilden einen Teilstapel gemäß Ausführungsformen der hierin offenbarten Gegenstände. Ebenso bilden der zweite Teil 122 der ersten Platte 102 und der zweite Teil 130 der zweiten Platte 103 einen Teilstapel gemäß Ausführungsformen der hierin offenbarten Gegenstände.

Fig. 5 zeigt eine Trennvorrichtung 150 gemäß Ausführungsformen der hierin offenbarten Gegenstände.

Gemäß einer Ausführungsform weist die Trennvorrichtung 150 eine Laservorrichtung 152 und eine mechanische Vorrichtung 154 auf. Die Trennvorrichtung 150 ist eingerichtet, um einen Plattenstapel 100 gemäß Ausführungsformen der hierin offenbarten Gegenstände zu trennen.

Gemäß einer Ausführungsform ist die Laservorrichtung 152 eingerichtet zum Erzeugen der Laserstrahlung 104, wie sie mit Bezug auf Fig. 1 beschrieben wurde, um dadurch die erste Platte 102 mittels der Laserstrahlung 104 zu trennen. Die mechanische Vorrichtung 154 ist eingerichtet, um eine mechanische Kraft 126, wie sie mit Bezug auf Fig. 3 beschrieben wurde, auf die zweite Platte 103 auszuüben und dadurch die zweite Platte 103 mechanisch zu trennen. Gemäß einer Ausführungsform weist die mechanische Vorrichtung 154 hierzu ein Stützelement 155 gemäß Ausführungsformen der hierin offenbarten Gegenstände auf.

Gemäß einer Ausführungsform weist die Trennvorrichtung ferner einen Träger auf, der teilweise in Fig. 5 bei 156 dargestellt ist. Gemäß einer Ausführungsform ist der Träger 156 eingerichtet, um den Plattenstapel 100 zu tragen und, gemäß einer weiteren Ausführungsform, bezüglich der Laservorrichtung 152 und der mechanischen Vorrichtung 154 zu positionieren.

Gemäß einer Ausführungsform weist die Trennvorrichtung 150 ferner eine Behandlungsvorrichtung 158 auf welche zum Erzeugen des Trennbereichs 106 in der ersten Platte 102 und/oder in der zweiten Platte 103 eingerichtet ist. Beispielsweise kann gemäß einer Ausführungsform vorgesehen sein, dass die Behandlungsvorrichtung 158 bezüglich des Trägers 156 positionierbar ist, um dadurch die Behandlungsvorrichtung 158 bezüglich des Trägers 156 zu positionieren. Gemäß einer anderen Ausführungsform kann vorgesehen sein dass der Träger 156 bezüglich der Behandlungsvorrichtung 158 positionierbar ist. Beispielsweise kann der Träger 156 bewegbar sein um den Plattenstapel 100 zunächst im Arbeitsbereich der Behandlungsvorrichtung 158 zu positionieren und nach dem Herstellen der Trennbereiche 106 den Plattenstapel 100 im Arbeitsbereich der Laservorrichtung 152 und der mechanischen Vorrichtung 154 zu positionieren.

Gemäß einer Ausführungsform sind die Laservorrichtung 152 und die mechanische Vorrichtung 154 angeordnet, um die Trennung der ersten Platte 102 und die Trennung der zweiten Platte 103 durchzuführen, ohne den Plattenstapel 100 zu bewegen. Beispielsweise sind gemäß einer Ausführungsform die Laservorrichtung 152 und die mechanische Vorrichtung 154 einander gegenüberliegend positioniert, beispielsweise wie in Figur fünf dargestellt. Gemäß einer weiteren Ausführungsform sind die Laservorrichtung 152 und die mechanische Vorrichtung 154 in einer Transportrichtung des Plattenstapels 100 mit Abstand voneinander angeordnet. In diesem Fall wird gemäß einer Ausführungsform die erste Platte des Plattenstapels 100 zunächst mit der Laservorrichtung 152 getrennt, anschließend der Plattenstapel im Arbeitsbereich der mechanischen Vorrichtung 154 positioniert, und die zweite Platte des Plattenstapels 100 mit der mechanischen Vorrichtung 154 getrennt.

Gemäß einer Ausführungsform fluchtet der Trennbereich 106 der ersten Platte 102 mit dem Trennbereich 106 der zweiten Platte. Beispielsweise verlaufen gemäß einer Ausführungsform der Trennbereich 106 der ersten Platte 102 und der Trennbereich 106 der zweiten Platte 103 in einer gemeinsamen Ebene. Gemäß einer Ausführungsform erstreckt sich die gemeinsame Ebene senkrecht zu einer Oberfläche des Plattenstapels 100. Beispielsweise erstreckt sich die gemeinsame Ebene in einer Ausführungsform parallel zu einer Stapelrichtung 160 entlang welcher die erste Platte 102 und die zweite Platte 103 übereinander gestapelt sind, beispielsweise wie in Fig. 5 dargestellt.

Gemäß einer Ausführungsform weist die Trennvorrichtung 150 eine Steuervorrichtung 162 auf, welche zur Steuerung von einer oder mehreren Komponenten der Trennvorrichtung gemäß einer oder mehreren Ausführungsformen der hierin offenbarten Gegenstände eingerichtet ist, beispielsweise zur Steuerung der Laservorrichtung 152, der mechanischen Vorrichtung 154, des Trägers 156 und/oder der Behandlungsvorrichtung 158. Hierzu ist die Steuervorrichtung 162 steuerungsmäßig mit den betreffenden Komponenten verbunden, beispielsweise wie bei 164 in Fig. 5 dargestellt. Die steuerungsmäßige Verbindung 164 kann hierbei unidirektional oder bidirektional ausgeführt sein, abhängig von der gewünschten Funktionalität.

Gemäß einer Ausführungsform weist die Steuervorrichtung einen Speicher 166 auf, in welchem ein Computerprogrammprodukt gemäß Ausführungsformen der hierin offenbarten Gegenstände gespeichert ist, insbesondere nichttransient gespeichert ist.

Ferner weist die Steuervorrichtung 162 gemäß einer Ausführungsform eine Prozessorvorrichtung 168 auf zur Ausführung eines Programmelementes des Computerprogrammprodukts. Gemäß einer Ausführungsform ist das Programmelement eingerichtet, um, wenn das Programmelement auf der Prozessorvorrichtung 168 ausgeführt wird, eine Funktionalität der Steuervorrichtung 162 gemäß Ausführungsformen der hierin offenbarten Gegenstände bereitzustellen und ein Verfahren gemäß Ausführungsformen der hierin offenbarten Gegenstände zu steuern.

Es sollte angemerkt werden, dass hierin offenbarte Elemente (zum Beispiel eine Vorrichtung, wie beispielsweise die Steuervorrichtung, die Laservorrichtung, die mechanische Vorrichtung, der Träger, die Behandlungsvorrichtung, ein Aktor, etc.) nicht auf die dezidierten Entitäten beschränkt sind, wie sie in einigen Ausführungsformen beschrieben sind. Vielmehr können die hierin offenbarten Gegenstände auf verschiedene Weisen implementiert werden, während sie immer noch die offenbarte spezifische Funktionalität liefern.

Es wird darauf hingewiesen, dass jede hierin offenbarte Entität (beispielsweise Vorrichtung, Element, Merkmal und Verfahrensschritt) nicht auf eine dezidierte Entität beschränkt ist, wie sie in einigen Ausführungsformen beschrieben ist. Vielmehr können die hierin beschriebenen Gegenstände auf verschiedene Weisen mit verschiedener Granularität auf Vorrichtungs-Niveau, auf Verfahrens-Niveau, oder auf Software-Niveau bereitgestellt sein, während sie immer noch die angegebene Funktionalität liefern. Ferner sollte angemerkt werden, dass gemäß Ausführungsformen eine separate Entität für jede der hierin offenbarten Funktionen bereitgestellt sein kann. Gemäß anderer Ausführungsformen kann eine Entität konfiguriert sein, um zwei oder mehr Funktionen, wie sie hierin beschrieben sind, zu liefern. Gemäß nochmals anderen Ausführungsformen können zwei oder mehr Entitäten konfiguriert sein, um zusammen eine Funktion, wie sie hierin beschrieben ist, zu liefern.

Es wird darauf hingewiesen, dass die hier beschriebenen Implementierungen in den Zeichnungen lediglich eine beschränkte Auswahl an möglichen Ausführungsvarianten der hierin offenbarten Gegenstände darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus. Die Begriffe "aufweisend" oder "enthaltend" umfassen jeweils die beiden Bedeutungen "unter anderem aufweisend" und "bestehend aus".

Ferner sollte angemerkt werden, dass, während die exemplarische Implementierung von Trennvorrichtung, Steuervorrichtung, Plattenstapel und Computerprogrammprodukt in den Zeichnungen eine bestimmte Kombination von mehreren Ausführungsformen der hierin offenbarten Gegenstände zeigt, jede andere Kombination von Ausführungsformen ebenso möglich und mit dieser Anmeldung als offenbart anzusehen ist.

Eine vorteilhafte Kombination von Ausführungsformen der hierin offenbarten Gegenstände lässt sich wie folgt zusammenfassen:
Offenbart wird eine Trennvorrichtung zum Trennen eines Plattenstapels, welcher eine erste Platte und eine zweite Platte aufweist. Die Trennvorrichtung weist eine Laservorrichtung auf, welche eingerichtet ist, um eine Trennung der ersten Platte mittels Laserstrahlung durchzuführen, und eine mechanische Vorrichtung, welche eingerichtet ist, um eine mechanische Trennung der zweiten Platte durchzuführen, und eine Behandlungsvorrichtung zum Erzeugen von mindestens einem Trennbereich in der ersten Platte, wobei die erste Platte in dem mindestens einen Trennbereich mechanisch geschwächt ist, um das Trennen der ersten Platte zu unterstützen, und einen Träger, welcher eingerichtet ist, um den Plattenstapel zu tragen und bezüglich der Laservorrichtung und der mechanischen Vorrichtung zu positionieren. Ferner wird ein Plattenstapel bzw. ein Teilstapel eines Plattenstapels offenbart.

## Patentansprüche

1. Trennvorrichtung (150) zum Trennen eines Plattenstapels (100), welcher eine erste Platte (102) und eine zweite Platte (103) aufweist, die Trennvorrichtung (150) aufweisend:
eine Laservorrichtung (152), welche eingerichtet ist, um eine Trennung der ersten Platte (102) mittels Laserstrahlung (104) durchzuführen;
eine mechanische Vorrichtung (154), welche eingerichtet ist, um eine mechanische Trennung der zweiten Platte (103) durchzuführen;
eine Behandlungsvorrichtung (158) zum Erzeugen von mindestens einem Trennbereich (106) in der ersten Platte (102), wobei die erste Platte (102) in dem mindestens einen Trennbereich (106) mechanisch geschwächt ist, um das Trennen der ersten Platte (102) zu unterstützen;
einen Träger (156), welcher eingerichtet ist, um den Plattenstapel (100) zu tragen und bezüglich der Laservorrichtung (152) und der mechanischen Vorrichtung (154) zu positionieren.

2. Trennvorrichtung (150) gemäß Anspruch 1, wobei die erste Platte (102) eine Glasplatte ist und die zweite Platte (103) eine Glasplatte ist.

3. Trennvorrichtung (150) gemäß irgendeinem der vorhergehenden Ansprüche, wobei die erste Platte (102) und die zweite Platte (103) mit Abstand voneinander angeordnet sind.

4. Trennvorrichtung (150) gemäß irgendeinem der vorhergehenden Ansprüche, wobei die erste Platte (102) und die zweite Platte (103) durch eine Verklebung miteinander verbunden sind.

5. Trennvorrichtung (150) gemäß irgendeinem der vorhergehenden Ansprüche, wobei zwischen der ersten Platte (102) und der zweiten Platte (103) ein Luftspalt (110) angeordnet ist.

6. Trennvorrichtung (150) gemäß irgendeinem der vorhergehenden Ansprüche, wobei die Behandlungsvorrichtung (158) eingerichtet ist zum Erzeugen von mindestens einem Trennbereich (106) in der zweiten Platte (103), wobei die zweite Platte (103) in dem mindestens einen Trennbereich (106) mechanisch geschwächt ist, um das Trennen der zweiten Platte (103) zu unterstützen.

7. Trennvorrichtung (150) gemäß einem der Ansprüche 1 bis 6, wobei die Behandlungsvorrichtung eingerichtet ist zum Erzeugen des mindestens einen Trennbereichs (106) mit einem Laserstrahl.

8. Trennvorrichtung (150) gemäß irgendeinem der vorhergehenden Ansprüche, wobei die Trennvorrichtung (150) eingerichtet ist, um zunächst die Trennung der ersten Platte (102) mittels der Laservorrichtung (152) durchzuführen und um anschließend die mechanische Trennung der zweiten Platte (103) durchzuführen.

9. Trennvorrichtung (150) gemäß einem der vorhergehenden Ansprüche, wobei die Laservorrichtung (152) mindestens einen CO2 Laser aufweist und die Laserstrahlung durch den mindestens einen CO2 Laser erzeugbar ist.

10. Trennvorrichtung (150) gemäß irgendeinem der vorhergehenden Ansprüche,
wobei die mechanische Vorrichtung (154) ein Stützelement (155) aufweist;
insbesondere wobei das Stützelement (155) die zweite Platte (103) in mindestens einem Stützbereich stützt, um die mechanische Trennung der zweiten Platte (103) durch Brechen der zweiten Platte (103) über das Stützelement (155) durchzuführen.

11. Trennvorrichtung (150) gemäß irgendeinem der vorhergehenden Ansprüche, wobei das Stützelement eines der folgenden Merkmale aufweist:
das Stützelement ist ein Schneidrad, wobei die mechanische Trennung der zweiten Platte (103) ein Rollen des Schneidrades über eine äußere Oberfläche der zweiten Platte (103) längs des mindestens einen Stützbereichs umfasst;
das Stützelement (155) definiert mindestens einen Kontaktbereich zum Kontaktieren der zweiten Platte (103), insbesondere wobei das Stützelement Rolle oder ein Balken ist.

12. Teilstapel eines Plattenstapels (100), welcher einen Teil (120, 122) einer ersten Platte (102) und einen Teil (128, 130) einer zweiten Platte (103) aufweist, wobei der Teil (120, 122) der ersten Platte (102) eine Trennfläche (123) aufweist, die durch eine Trennung mittels Laserstrahlung in einem mechanisch geschwächten Trennbereich, welcher das Trennen der ersten Platte unterstützt, erzeugt ist; und wobei der Teil (128, 130) der zweiten Platte (103) eine Trennfläche (125) aufweist, die durch eine mechanische Trennung erzeugt ist.

13. Verfahren zum Trennen eines Plattenstapels (100), welcher eine erste Platte (102) und eine zweite Platte (103) aufweist, das Verfahren aufweisend:
Erzeugen von mindestens einem Trennbereich (106) in der ersten Platte (102), wobei die erste Platte (102) in dem mindestens einen Trennbereich (106) mechanisch geschwächt ist, um das Trennen der ersten Platte (102) zu unterstützen;
eine Trennung der ersten Platte (102) mittels Laserstrahlung;
eine mechanische Trennung (103) der zweiten Platte.

14. Trennvorrichtung (150) gemäß einem der Ansprüche 1 bis 11, ferner aufweisend eine Steuervorrichtung (162), wobei die Steuervorrichtung eingerichtet ist, um eine Ausführung eines Verfahrens gemäß Anspruch 13 zu bewirken und/oder zu koordinieren.

15. Computerprogrammprodukt, welches ein Programmelement aufweist, wobei das Computerprogrammprodukt eingerichtet ist um, wenn das Programmelement auf einer Prozessorvorrichtung (168) ausgeführt wird, eine Ausführung eines Verfahrens gemäß Anspruch 13 durch eine Trennvorrichtung (150) gemäß einem der Ansprüche 1 bis 11 zu bewirken.

## Claims

1. A separating device (150) for separating a plate stack (100) comprising a first plate (102) and a second plate (103), the separating device (150) comprising:
a laser device (152) configured to perform separation of the first plate (102) by means of laser radiation (104);
a mechanical device (154) configured to perform mechanical separation of the second plate (103);
a treatment device (158) for generating at least one separation region (106) in the first plate (102), wherein the first plate (102) is mechanically weakened in the at least one separation region (106) to assist the separation of the first plate (102);
a carrier (156) configured to carry and position the plate stack (100) with respect to the laser device (152) and the mechanical device (154).

2. The separating device (150) according to claim 1, wherein the first plate (102) is a glass plate and the second plate (103) is a glass plate.

3. The separating device (150) according to any one of the preceding claims, wherein the first plate (102) and the second plate (103) are spaced apart from each other.

4. The separating device (150) according to any one of the preceding claims, wherein the first plate (102) and the second plate (103) are connected to each other by an adhesive bond.

5. The separating device (150) according to any one of the preceding claims, wherein an air gap (110) is arranged between the first plate (102) and the second plate (103).

6. The separating device (150) according to any one of the preceding claims, wherein the treatment device (158) is configured to generate at least one separation region (106) in the second plate (103), wherein the second plate (103) is mechanically weakened in the at least one separation region (106) to assist the separation of the second plate (103).

7. The separating device (150) according to one of claims 1 to 6, wherein the treatment device is configured to generate the at least one separation region (106) with a laser beam.

8. The separating device (150) according to any one of the preceding claims, wherein the separating device (150) is configured to first perform the separation of the first plate (102) by means of the laser device (152) and to subsequently perform the mechanical separation of the second plate (103).

9. The separating device (150) according to one of the preceding claims, wherein the laser device (152) comprises at least one CO2 laser and the laser radiation is generatable by the at least one CO2 laser.

10. The separating device (150) according to any one of the preceding claims,
wherein the mechanical device (154) comprises a support element (155);
in particular wherein the support element (155) supports the second plate (103) in at least one support region to perform the mechanical separation of the second plate (103) by breaking the second plate (103) over the support element (155).

11. The separating device (150) according to any one of the preceding claims, wherein the support element comprises one of the following features:
the support element is a cutting wheel, wherein the mechanical separation of the second plate (103) comprises rolling the cutting wheel over an outer surface of the second plate (103) along the at least one support region;
the support element (155) defines at least one contact region for contacting the second plate (103), in particular wherein the support element is a roller or a beam.

12. A partial stack of a plate stack (100) comprising a part (120, 122) of a first plate (102) and a part (128, 130) of a second plate (103), wherein the part (120, 122) of the first plate (102) comprises a separation surface (123) generated by a separation by means of laser radiation in a mechanically weakened separation region that assists the separation of the first plate; and wherein the part (128, 130) of the second plate (103) comprises a separation surface (125) generated by a mechanical separation.

13. A method for separating a plate stack (100) comprising a first plate (102) and a second plate (103), the method comprising:
generating at least one separation region (106) in the first plate (102), wherein the first plate (102) is mechanically weakened in the at least one separation region (106) to assist the separation of the first plate (102);
a separation of the first plate (102) by means of laser radiation;
a mechanical separation (103) of the second plate.

14. The separating device (150) according to one of claims 1 to 11, further comprising a control device (162), wherein the control device is configured to effect and/or coordinate an execution of a method according to claim 13.

15. A computer program product comprising a program element, wherein the computer program product is configured to, when the program element is executed on a processor device (168), effect an execution of a method according to claim 13 by a separating device (150) according to one of claims 1 to 11.

## Revendications

1. Dispositif de séparation (150) permettant de séparer une pile de plaques (100) présentant une première plaque (102) et une seconde plaque (103), le dispositif de séparation (150) présentant :
un dispositif laser (152) conçu pour mettre en œuvre une séparation de la première plaque (102) au moyen d'un rayonnement laser (104) ;
un dispositif mécanique (154) conçu pour mettre en œuvre une séparation mécanique de la seconde plaque (103) ;
un dispositif de traitement (158) permettant de créer au moins une région de séparation (106) dans la première plaque (102), dans lequel la première plaque (102) est mécaniquement affaiblie dans au moins une région de séparation (106) afin de faciliter la séparation de la première plaque (102) ;
un support (156) conçu pour supporter la pile de plaques (100) et la positionner par rapport au dispositif laser (152) et au dispositif mécanique (154).

2. Dispositif de séparation (150) selon la revendication 1, dans lequel la première plaque (102) est une plaque de verre et la seconde plaque (103) est une plaque de verre.

3. Dispositif de séparation (150) selon l'une quelconque des revendications précédentes, dans lequel la première plaque (102) et la seconde plaque (103) sont agencées à distance l'une de l'autre.

4. Dispositif de séparation (150) selon l'une quelconque des revendications précédentes, dans lequel la première plaque (102) et la seconde plaque (103) sont reliées l'une à l'autre par un collage.

5. Dispositif de séparation (150) selon l'une quelconque des revendications précédentes, dans lequel un intervalle d'air (110) est agencé entre la première plaque (102) et la seconde plaque (103).

6. Dispositif de séparation (150) selon l'une quelconque des revendications précédentes, dans lequel le dispositif de traitement (158) est conçu pour créer au moins une région de séparation (106) dans la seconde plaque (103), dans lequel la seconde plaque (103) est mécaniquement affaiblie dans au moins une région de séparation (106) afin de faciliter la séparation de la seconde plaque (103).

7. Dispositif de séparation (150) selon l'une quelconque des revendications 1 à 6, dans lequel le dispositif de traitement est conçu pour créer au moins une région de séparation (106) grâce à un faisceau laser.

8. Dispositif de séparation (150) selon l'une quelconque des revendications précédentes, dans lequel le dispositif de séparation (150) est conçu pour mettre en œuvre d'abord la séparation de la première plaque (102) au moyen du dispositif laser (152) et pour mettre en œuvre ensuite la séparation mécanique de la seconde plaque (103).

9. Dispositif de séparation (150) selon l'une quelconque des revendications précédentes, dans lequel le dispositif laser (152) présente au moins un laser au CO2 et le rayonnement laser peut être généré grâce à au moins un laser au CO2.

10. Dispositif de séparation (150) selon l'une quelconque des revendications précédentes,
dans lequel le dispositif mécanique (154) présente un élément d'appui (155) ;
l'élément d'appui (155) permettant en particulier l'appui de la seconde plaque (103) dans au moins une région d'appui afin de mettre en œuvre la séparation mécanique de la seconde plaque (103) par bris de la seconde plaque (103) par l'intermédiaire de l'élément d'appui (155).

11. Dispositif de séparation (150) selon l'une quelconque des revendications précédentes, dans lequel l'élément d'appui présente une des caractéristiques ci-dessous :
l'élément d'appui est une roue de coupe, dans lequel la séparation mécanique de la seconde plaque (103) comprend une étape consistant à faire rouler la roue de coupe sur une surface extérieure de la seconde plaque (103) le long d'au moins une région d'appui ;
l'élément d'appui (155) définit au moins une région de contact permettant une mise en contact avec la seconde plaque (103), en particulier dans lequel l'élément d'appui est un rouleau ou une poutre.

12. Sous-pile d'une pile de plaques (100), qui présente une partie (120, 122) d'une première plaque (102) et une partie (128, 130) d'une seconde plaque (103), dans laquelle la partie (120, 122) de la première plaque (102) présente une surface de séparation (123) qui est générée grâce à une séparation au moyen d'un rayonnement laser dans une région de séparation mécaniquement affaiblie qui facilite la séparation de la première plaque ; et dans laquelle la partie (128, 130) de la seconde plaque (103) présente une surface de séparation (125) qui est générée grâce à une séparation mécanique.

13. Procédé de séparation d'une pile de plaques (100) présentant une première plaque (102) et une seconde plaque (103), le procédé comprenant les étapes consistant à :
générer au moins une région de séparation (106) dans la première plaque (102), dans lequel la première plaque (102) est mécaniquement affaiblie dans la au moins une région de séparation (106) afin de faciliter la séparation de la première plaque (102) ;
séparer la première plaque (102) au moyen d'un rayonnement laser ;
séparer mécaniquement la seconde plaque (103).

14. Dispositif de séparation (150) selon l'une quelconque des revendications 1 à 11, comprenant en outre un dispositif de commande (162), dans lequel le dispositif de commande est conçu pour déclencher et/ou coordonner la mise en œuvre d'un procédé selon la revendication 13.

15. Produit-programme informatique comprenant un élément de programme, dans lequel le produit-programme informatique est conçu pour, lorsque l'élément de programme est exécuté sur un dispositif formant processeur (168), déclencher la mise en œuvre d'un procédé selon la revendication 13 grâce à un dispositif de séparation (150) selon l'une quelconque des revendications 1 à 11.
